# EUROPÄISCHE PATENTSCHRIFT

(11) **EP 3 535 824 B1**
(45) Veröffentlichungstag und Bekanntmachung des Hinweises auf die Patenterteilung: **01.07.2020**
(21) Anmeldenummer: 17772603.1
(22) Anmeldetag: 12.09.2017
(51) Int. Cl.: H02G 5/02

(54) **SAMMELSCHIENENHALTER UND EINE ENTSPRECHENDE ANORDNUNG**
BUSBAR HOLDER AND CORRESPONDING ASSEMBLY
SUPPORT DE JEU DE BARRES ET ENSEMBLE CORRESPONDANT

(30) Priorität: 04.11.2016 DE 102016121074
(43) Veröffentlichungstag der Anmeldung: 11.09.2019
(73) Patentinhaber: Rittal GmbH & Co. KG, 35745 Herborn (DE)
(72) Erfinder: SCHELL, Michael, 35687 Dillenburg-Niederscheid (DE); ZIRKLER, Sven, 56626 Andernach (DE); MORITZ, Christian, 57520 Neunkhausen (DE)
(74) Vertreter: Angerhausen, Christoph
(86) Internationale Anmeldenummer: PCT/DE2017/100769
(87) Internationale Veröffentlichungsnummer: WO 2018/082728

(56) Entgegenhaltungen:
- DE-A1- 2 556 307
- DE-A1- 4 005 138
- DE-B4-102005 044 127
- DE-U1- 8 208 760

## Beschreibung

Die Erfindung geht aus von einem Sammelschienenhalter gemäß dem Oberbegriff des Anspruchs 1. Ein derartiger Sammelschienenhalter ist aus der DE 82 08 760 U1 bekannt. Ähnliche Sammelschienenhalter beschreiben auch die DE 10 2005 044 127 B4, die EP 1 193 822 B1, die DE 36 01 988 C2, die DE 82 30 599 U1 und die DE 86 09 413 U1.

Die aus dem Stand der Technik bekannten Sammelschienenhalter haben den Nachteil, dass sie vergleichsweise aufwendig in der Anwendung sind, was insbesondere dadurch bedingt ist, dass nach dem Einsetzen der mindestens einen Sammelschiene in den zwischen dem Unterteil und dem Oberteil gebildeten Sammelschienendurchlass das Unterteil mit dem Oberteil mittels mehrere Schraubbolzen verschraubt werden muss, um die Sammelschiene fest in dem Sammelschienendurchlass zu halten.

Es ist daher die Aufgabe der Erfindung, eine Sammelschiene der eingangs beschriebenen Art derart weiterzuentwickeln, dass sie einfach in der Anwendung ist.

Diese Aufgabe wird durch einen Sammelschienenhalter mit den Merkmalen des Anspruchs 1 gelöst. Der nebengeordnete Anspruch 11 beschreibt eine entsprechende Anordnung aus mindestens einem derartigen Sammelschienenhalter und mindestens einer Sammelschiene. Die abhängigen Ansprüche betreffen jeweils vorteilhafte Ausführungsformen der Erfindung.

Demgemäß ist bei einem Sammelschienenhalter vorgesehen, dass sich ein Schraubkanal zwischen der Auflageseite und der Montageseite erstreckt, der an der Montageseite über einen aus dem Schraubkanal herausragenden und über die Montageseite hervorstehenden Positionierstift verschlossen ist.

Beispielsweise können das Oberteil und das Unterteil zwischen der Offenposition und der Schließposition in einer definierten linearen Bewegung, etwa in Längsrichtung oder in Querrichtung des Sammelschienenhalters, zueinander verschieblich sein.

Anstelle der Ausbildung einer Schraubverbindung zwischen dem Oberteil und dem Unterteil des Sammelschienenhalters wird somit vorgeschlagen, das Oberteil und das Unterteil über eine Kombination aus einer Nut-Feder-Verbindung und einer auslösbaren Rastverbindung aneinander festzulegen. Die Montage mindestens einer Sammelschiene in dem Sammelschienenhalter ist somit werkzeuglos möglich. Es kann vorgesehen sein, dass das Wiederauslösen der Rastklinke, um das Unterteil und das Oberteil aus der Schließposition in die Offenposition überführen zu können, die Verwendung eines Werkzeugs erfordert, beispielsweise eines Schraubendrehers, um ein versehentliches Wiederauslösen von Unterteil und Oberteil aus der Schließposition zu vermeiden.

Eine Feder der Nut-Feder-Verbindung kann als mindestens ein T-förmiger und L-förmiger Vorsprung ausgebildet sein, der sich von der Auflageseite des den T-förmigen oder L-förmigen Vorsprung aufweisenden Teils von Oberteil und Unterteil erstreckt. Der Vorsprung kann sich im Wesentlichen senkrecht zu der Auflageseite erstrecken. Der Vorsprung kann an einem freien Ende mindestens einen vorspringenden Haken aufweisen. Der Haken kann sich parallel zu der Auflageseite und beispielsweise in Längsrichtung des Sammelschienenhalters, insbesondere in Längsrichtung des Oberteils oder des Unterteils, oder sich senkrecht dazu erstrecken. Insbesondere kann der Vorsprung einen Steg aufweisen, der sich senkrecht zu der Auflageseite erstreckt und mit einem ersten Ende an die Auflageseite angeformt ist und ein dem ersten Ende gegenüberliegendes zweites Ende aufweisen, an dem der mindestens eine sich in Längsrichtung des Sammelschienenhalters oder senkrecht dazu erstreckende Haken angeformt ist. Es ist verständlich, dass sich die Art der Ausbildung der Nut-Feder-Verbindung, insbesondere die Ausbildung der die Nut und die Feder bildenden Geometrien davon abhängt, in welcher Verstellrichtung von Oberteil und Unterteil zueinander diese aneinander festgelegt bzw. voneinander gelöst werden sollen.

Der T-förmige oder L-förmige Vorsprung kann sich in eine Ausnehmung des jeweils anderen Teils von Oberteil und Unterteil hinein erstrecken, wobei der Vorsprung in der Schließposition einen Hinterschnitt der Ausnehmung hintergreift, und wobei der Vorsprung in der Offenstellung in Bezug auf den Hinterschnitt freigestellt ist, so dass in der Offenstellung das Oberteil von dem Unterteil abgehoben werden kann und in der Schließposition das Oberteil an dem Unterteil festgelegt ist.

Das die Ausnehmung aufweisende Teil von Oberteil und Unterteil kann an einer Außenseite einen in dem Hinterschnitt endenden Durchlass aufweisen. Der Durchlass kann daher als Sichtfenster dienen, um in der Schließposition kontrollieren zu können, ob der Vorsprung den Hinterschnitt ordnungsgemäß hintergreift, so dass das Oberteil und das Unterteil sicher aneinander festgelegt sind.

Die auslösbare Rastklinke kann von einer ersten der beiden gegenüberliegenden Auflageseiten vorspringen und in der Schließposition in einer Rastaufnahme in einer zweiten der beiden gegenüberliegenden Auflageseiten aufgenommen sein.

Dabei kann das die Rastaufnahme aufweisende Teil von Oberteil und Unterteil an einer Außenseite eine in die Rastaufnahme mündende Werkzeugeinstecköffnung aufweisen. Über die Werkzeugeinstecköffnung ist es möglich, beispielsweise mit Hilfe eines Schraubendrehers, in der Schließposition des Sammelschienenhalters die Rastklinke soweit vorzuspannen, dass sie nicht mehr in die Rastaufnahme eingreift und somit das Oberteil gegenüber dem Unterteil verschieblich ist, um die beiden Teile in die Offenposition zu überführen, in welcher das Oberteil von dem Unterteil abgehoben werden kann.

Der Positionierstift ermöglicht es, den Sammelschienenhalter, insbesondere das Unterteil des Sammelschienenhalters in Bezug auf eine Unterlage, auf welcher der Sammelschienenhalter befestigt werden soll, auszurichten, beispielsweise derart, dass der mindestens eine Schraubkanal in dem Unterteil mit einer entsprechenden Bohrung oder einem Durchlass in der Unterlage, auf welcher der Sammelschienenhalter befestigt werden soll, fluchtet.

Der Positionierstift kann in der Montageseite lösbar und vorzugsweise über eine Sollbruchstelle befestigt werden. Auf diese Weise ist es möglich, nach erfolgter Ausrichtung des Sammelschienenhalters in Bezug auf die Unterlage, den Positionierstift aus dem Schraubkanal herauszubrechen, so dass der Schraubkanal für die Durchführung eines Bolzens oder dergleichen freigelegt wird.

Beispielsweise kann das Unterteil des Sammelschienenhalters mindestens zwei Schraubkanäle aufweisen, von denen einer einen Positionierstift der zuvor beschriebenen Art aufweist. In einem ersten Schritt kann das Unterteil des Sammelschienenhalters mit Hilfe des Positionierstifts in Bezug auf die Unterlage, auf welcher der Sammelschienenhalter befestigt werden soll, vorausgerichtet werden. Sobald die Vorausrichtung erfolgt ist, kann über den mindestens einen weiteren Schraubkanal, der keinen Positionierstift aufweist, das Unterteil des Sammelschienenhalters über einen Bolzen oder dergleichen verschraubt werden. In einem weiteren Schritt kann der Positionierstift aus dem weiteren Schraubkanal herausgebrochen werden, um über den dadurch frei werdenden Schraubkanal das Unterteil des Sammelschienenhalters über einen weiteren Befestigungspunkt an der Unterlage festzulegen.

Beispielsweise kann der Positionierstift über eine Sollbruchstelle am Innenumfang eines Ringflansches befestigt sein, der im Inneren des Schraubkanals angrenzend an die Montageseite und vorzugsweise fluchtend mit der Montageseite angeordnet ist.

Der Querschnitt des mindestens einen Sammelschienendurchlasses kann von dem Querschnitt einer Sammelschienenaufnahme in dem Unterteil gebildet sein, wobei die Sammelschienenaufnahme von der Auflageseite des Oberteils verschlossen ist, wenn das Oberteil und das Unterteil miteinander verbunden sind. Bei dieser Ausführungsform ist somit die Sammelschiene vollständig in dem Unterteil des Sammelschienenhalters aufgenommen, wobei das Oberteil lediglich noch eine obere Abdeckung der in dem Unterteil gebildeten Sammelschienenaufnahme bildet. Daher kann das Oberteil als vergleichsweise einfaches Oberteil ausgebildet werden mit im Wesentlichen ebener Auflageseite. Des Weiteren kann durch diese Ausführungsform erreicht werden, dass auch bei in die Sammelschienenaufnahme des Unterteils eingesetzter Sammelschiene das Oberteil und das Unterteil bei aneinandergrenzenden Gleitflächen an den sich gegenüberliegenden Auflagenseiten gegeneinander verschieblich sind, um das Oberteil und das Unterteil zwischen der Schließposition und der Offenposition verstellen zu können. Weiterhin kann bei dieser Ausführungsform eine Längsseite der in die Sammelschienenaufnahme in dem Unterteil eingesetzten Sammelschiene mit der Gleitfläche des Unterteils fluchten, so dass die Gleitfläche des Unterteils und die betreffende Längsseite der Sammelschiene eine ebene Gleitfläche bilden, entlang welcher das Oberteil zwischen der Schließposition und der Offenposition verstellbar ist.

Das Oberteil kann an seiner Außenseite je Sammelschienenaufnahme eine die Position der Sammelschienenaufnahme kennzeichnende Markierung aufweisen. Die Markierung kann als eine Ausnehmung in der Oberseite des Oberteils ausgebildet sein.

Die Geometrie von Sammelschienendurchlass und Sammelschienenaufnahme ist im Rahmen der oben genannten Einschränkungen auf keine bestimmten Geometrien begrenzt und kann sich gerade aufgrund der erfindungsgemäß einfachen Konstruktion von Oberteil und Unterteil nach der Geometrie einer aufzunehmenden Sammelschiene richten, was nicht zwingend bedeutet, dass die Geometrie von Sammelschienendurchlass und Sammelschienenaufnahme der Außengeomtrie einer aufzunehmenden Sammelschiene entspricht. Vorzugsweise ist die Geometrie von Sammelschienendurchlass und Sammelschienenaufnahme jedoch rechteckig, wobei sich beispielsweise eine lange Seite von Sammelschienendurchlass und Sammelschienenaufnahme in Längsrichtung des Sammelschienenhalters oder senkrecht dazu erstrecken kann

Demgemäß ist bei einer Anordnung aus einem Sammelschienenhalter der zuvor beschriebenen Art und mindestens einer Sammelschiene die Sammelschiene in die Sammelschienenaufnahme in dem Unterteil eingesetzt, wobei eine äußere Profilseite der Sammelschiene mit der Gleitfläche des Unterteils fluchtet und an der Gleitfläche des Oberteils anliegt, wenn das Oberteil und das Unterteil miteinander verbunden sind.

Weitere Einzelheiten der Erfindung werden anhand der nachstehenden Figuren erläutert. Dabei zeigt:
- Figur 1: eine beispielhafte Anordnung eines Sammelschienenhalters mit zwei darin befestigten Sammelschienen;
- Figur 2: eine Ausführungsform eines Sammelschienenhalteroberteils in perspektivischer Darstellung;
- Figur 3: das Oberteil gemäß Figur 2 mit Sicht auf die Auflageseite;
- Figur 4: eine Ausführungsform eines Unterteils in perspektivischer Darstellung;
- Figur 5: das Unterteil gemäß Figur 4 mit Sicht auf die Auflageseite;
- Figur 6: einen perspektivischen Längsquerschnitt des Unterteils gemäß den Figuren 4 und 5; und
- Figur 7: eine Ausführungsform eines Sammelschienenhalters im perspektivischen Längsquerschnitt.

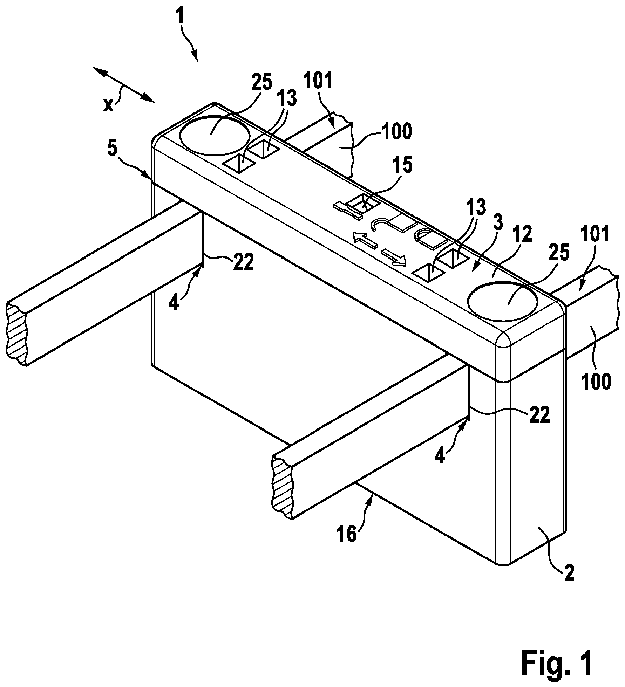

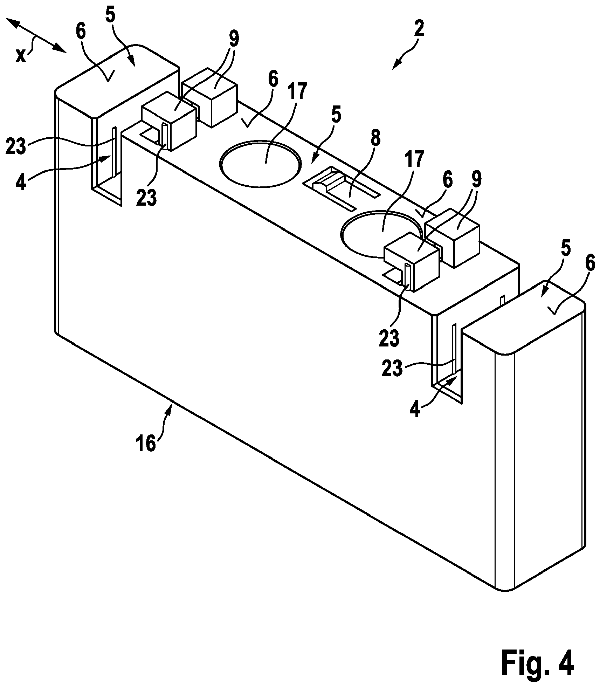

Eine beispielhafte Anordnung aus zwei Sammelschienen 100, die in einem Sammelschienenhalter 1 aufgenommen sind, ist in Figur 1 gezeigt. Der Sammelschienenhalter 1 besteht aus einem Oberteil 3 und einem Unterteil 2, wobei sich die Sammelschienen 100 jeweils durch einen zwischen dem Oberteil 3 und dem Unterteil 2 gebildeten Sammelschienendurchlass 4 senkrecht zur Längsrichtung x des Sammelschienenhalters 1 durch den Sammelschienenhalter 1 hindurch erstrecken. Der Sammelschienendurchlass 4 wird von einer Sammelschienenaufnahme 22 im Unterteil 2 des Sammelschienenhalters 1 gebildet, die von oben durch das Oberteil 3 abgedeckt ist, so dass die Sammelschienen 100 fest in den Sammelschienenaufnahmen 22 gehalten sind. Für einen Presssitz der Sammelschienen 100 in den Sammelschienenaufnahmen 22 können die Sammelschienenaufnahmen 22 an ihrem Innenumfang Quetschrippen 23 (siehe Figur 4) aufweisen. Die Sammelschienen 100 erstrecken sich mit ihrer lange Seite ihres rechteckigen Querschnitts senkrecht zur Längsrichtung x des Halters 1. Alternativ können sie sich jedoch auch in Längsrichtung x des Halters 1 erstrecken, wobei in diesem Fall die Geometrie der Durchlässe 4 bzw. Aufnahmen 22 so anzupassen ist, dass eine der langen Querschnittsseiten der Sammelschienen 100 mit den Gleitflächen 5 fluchtet, wenn die jeweilige Sammelschiene in ihre jeweilige Aufnahme 22 eingesetzt ist.

Das Oberteil 3 und das Unterteil 2 sind über eine in Figur 1 nicht zu erkennende Nut-Feder-Verbindung miteinander verbunden, wobei die beiden Teile 2, 3 in der Längsrichtung x gegeneinander verschieblich sind und in der in Figur 1 dargestellten Schließstellung über eine von einer Rastklinke (nicht dargestellt) bereitgestellten Rastverbindung zueinander festgelegt sind. Die Rastklinke kann über eine Werkzeugeinstecköffnung 15 beispielsweise mit Hilfe eines Schraubendrehers vorgespannt werden, so dass die Teile 2, 3 in der eingezeichneten Längsrichtung x gegeneinander verschoben werden können, insbesondere um die Teile 2, 3 aus der in Figur 1 dargestellten Schließstellung in eine Offenstellung zu überführen, in der das Oberteil 3 von dem Unterteil 2 abgehoben werden kann.

Die Durchlässe 13 auf der oberen Außenseite 12 des Oberteils 3 erlauben einen Einblick in den Sammelschienenhalter 1 und auf die Nut-Feder-Verbindung (nicht dargestellt), um es einem Benutzer zu ermöglichen, in der dargestellten Schließposition das ordnungsgemäße Ineinandergreifen der Nut-Feder-Verbindung optisch zu kontrollieren.

Das Oberteil 3 und das Unterteil 2 grenzen entlang gegenüber liegender Auflageseiten 5 aneinander, die sogleich Gleitflächen bilden, entlang welcher die Teile 2, 3 in der eingezeichneten Längsrichtung x gegeneinander verschoben werden können. Weiterhin weist das Oberteil 3 an seiner Außenseite 12 je Sammelschienenaufnahme 22 eine die Position der Sammelschienenaufnahme 22 kennzeichnende Markierung 25 auf.

Es ist weiterhin der Figur 1 zu entnehmen, dass die vertikale Tiefe der Sammelschienenaufnahmen 22 in Richtung senkrecht zu der Außenseite 12 des Oberteils 3 gerade einer vertikalen Abmessung der Sammelschienen 100 entspricht, so dass, wenn die Sammelschiene 100 in die jeweilige Sammelschienenaufnahme 22 eingesetzt ist, eine obere Profilseite 101 der Sammelschiene 100 mit der Auflageseite 5 des Unterteils 2 fluchtet. Dadurch ist das Oberteil 3 auch bei eingesetzten Sammelschienen 100 im Rahmen des durch die Nut-Feder-Verbindung sowie die Rastklinke gebildeten Bewegungsspielraums entlang der Längsrichtung x ungehindert beweglich.

Das Unterteil 2 weist weiterhin eine Montageseite 16 auf, über die der Sammelschienenhalter 1 auf einer Unterlage, beispielsweise auf einer Montageschiene oder einer Montageplatte eines Schaltschrankgehäuses befestigt werden kann.

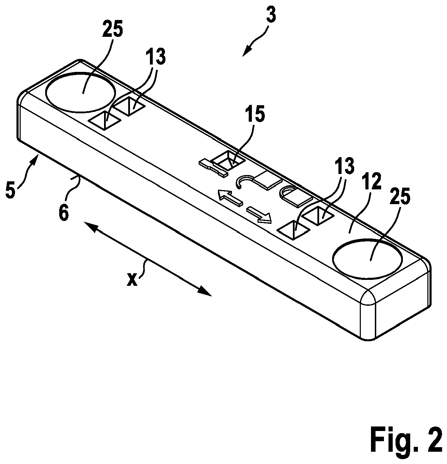

Eine beispielhalte Ausführungsform für ein Oberteil 3 eines Sammelschienenhalters ist in Figur 2 gezeigt. Das Oberteil 3 weist an seiner Unterseite eine Auflageseite 5 mit einer ebenen Gleitfläche 6 auf, über die das Oberteil 3 auf einer Gleitfläche an einer Auflageseite eines Unterteils (nicht dargestellt) in Längsrichtung x verschieblich aufgelegt werden kann. Das Oberteil 3 weist entsprechend der in Figur 1 gezeigten Ausführungsform an seiner oberen Außenseite 12 Durchlässe 13 auf, über der der Sitz einer zwischen dem gezeigten Oberteil 3 und einem Unterteil gebildeten Nut-Feder-Verbindung überprüft werden kann. Auf derselben Außenseite 12 weist das Oberteil 3 eine Werkzeugeinstecköffnung 15 auf, über die eine Rastklinke eines Unterteils, mit dem das gezeigte Oberteil 3 zu einem Sammelschienenhalter kombiniert wird, vorgespannt werden kann. Dies ermöglicht es insbesondere, die Rastklinke aus seiner Rastposition, in der die Rastklinke des Unterteils in eine Ausnehmung des Oberteils 3 an der Auflageseite 5 eingreift, wieder auszulösen, so dass das Oberteil 3 gegenüber dem Unterteil in der Längsrichtung x zur Lösung der Nut-Feder-Verbindung verstellt werden kann und somit das Oberteil 3 von dem Unterteil 2 abgehoben werden kann.

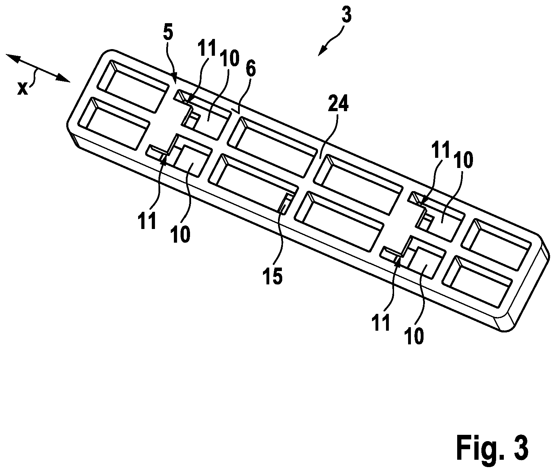

Die Unterseite des in Figur 2 gezeigten Oberteils 3 ist in Figur 3 gezeigt. Die Unterseite weist eine Auflageseite 5 mit einer Gleitfläche 6 auf, über die das Oberteil 3 auf einer entsprechenden Auflageseite und Gleitfläche eines Unterteils (nicht dargestellt) gleitend verschieblich zur Anlage gebracht werden kann. Für die zwischen dem gezeigten Oberteil 3 und einem Unterteil 2 auszubildende Nut-Feder-Verbindung (nicht dargestellt), weist das Oberteil 3 eine über die Auflageseite 5 zugängliche Ausnehmung 10 mit einem Hinterschnitt 11 auf. Der Hinterschnitt 11 kann beispielsweise von einem Vorsprung an der Auflageseite eines Unterteils hintergriffen werden. Der Vorsprung kann dazu beispielsweise als L-förmiger Vorsprung ausgebildet sein.

Eine beispielhafte Ausführungsform für ein Unterteil 2, welches auch in Verbindung mit einem Oberteil 3 gemäß den Figuren 2 und 3 verwendet werden kann, ist in Figur 4 gezeigt. Das Unterteil 2 weist eine Montageseite 16 zur Montage des Unterteils 2 beziehungsweise des Sammelschienenhalters auf einer Unterlagen, beispielsweise einer Montageschiene auf. Ausgehend von der der Montageseite 16 gegenüberliegenden Auflageseite 5 erstreckt sich senkrecht zu der Auflageseite 5 sowie senkrecht zu der Längsrichtung x eine nutförmige Ausnehmung, welche einen Sammelschienendurchlass 4 bildet. Die Tiefe des Sammelschienendurchlasses 4 senkrecht zu der Auflageseite 5 kann gerade einer Abmessung einer Sammelschiene (nicht dargestellt) senkrecht zu der Längsrichtung entsprechen, so dass die Sammelschiene vollständig in dem Sammelschienendurchlass 4 aufgenommen ist.

Die sich von der Auflageseite 5 und der Gleitfläche 6 erstreckenden Vorsprünge 9 sind L-förmig ausgebildet, wobei die Vorsprünge 9 an ihrem freien Ende jeweils einen in Längsrichtung x ausgerichteten Horizontalsteg aufweisen. Die Horizontalstege sind über Vertikalstege mit äußeren Quetschrippen 23 an die Auflageseite 5 angebunden.

Weiterhin weist die Auflageseite 5 eine Rastklinke 8 auf, die mit ihrem freien Ende über die Auflageseite 5 hinausragt. Die Rastklinke 8 ist über einen flexiblen Arm an den Körper des Unterteils 2 angebunden, so dass das freie Ende der Rastklinke 8 senkrecht zu der Auflageseite 5 vorgespannt werden kann.

Die Zusammenschau der Figuren 3 und 4 lässt erkennen, wie die Nut-Feder-Verbindung zwischen dem Oberteil 3 und dem Unterteil 2 ausgebildet ist. Wenn das Oberteil 3 auf dem Unterteil 2 aufgesetzt ist, erstreckt sich das Unterteil mit seinen Vorsprüngen 9 in die Ausnehmungen 10 des Oberteils 3 hinein. Durch Verlagern des Oberteils 3 und des Unterteils 2 in Längsrichtung x zueinander kann erreicht werden, dass die freien Enden der Vorsprünge 9 die Hinterschnitte 11 der Ausnehmungen 10 hintergreifen, so dass das Oberteil 3 an dem Unterteil 2 festgelegt ist. In einer Schließposition, in der die Vorsprünge 9 die Hinterschnitte 11 hintergreifen, kann die Rastklinke 8 des Unterteils 2 den Mittelsteg 24 des Oberteils 3 hintergreifen, so dass das Oberteil 3 und das Unterteil 2 in der Längsrichtung x unverschieblich zueinander festgelegt sind. In dieser Schließposition kann die Rastklinke 8 über die Werkzeugeinstecköffnung 15 vorgespannt werden, um die Rastklinke 8 von dem Mittelsteg 24 auszulösen, so dass die Teile 2, 3 in der Längsrichtung x wieder zueinander verschieblich sind und somit in die Offenstellung überführt werden können, in der das Oberteil 3 von dem Unterteil 2 abgehoben werden kann.

Die Quetschrippen 23 an den Außenseiten der Vorsprünge 9 sitzen im Presssitz am Innenumfang der Ausnehmungen 10 in der Auflageseite 5 des Oberteils 3 an, so dass das Oberteil 3 und das Unterteil 2 auch in der Offenstellung bereits eine Vorfixierung aufweisen und somit eine gewisse Verliersicherheit von Oberteil 3 und Unterteil 2 gegeben ist.

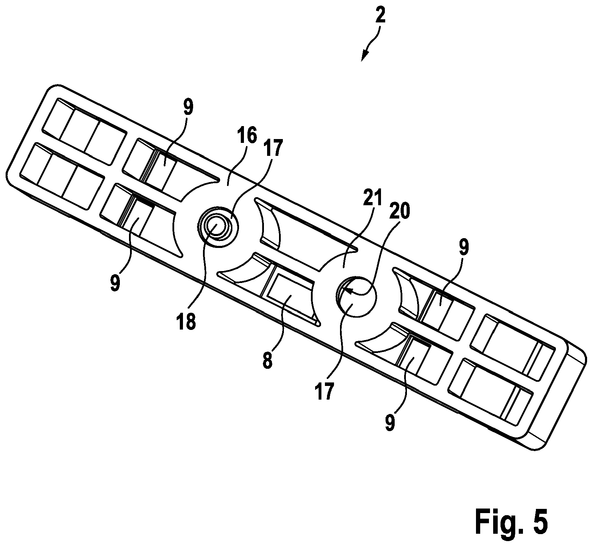

Die Figur 5 zeigt die Unterseite des Unterteils 2 gemäß Figur 4 wobei diese einen Blick auf die Montageseite 16 des Unterteils 2 gibt. Über die Montageseite 16 kann das Unterteil 2 auf einer beliebigen Unterlage, beispielsweise einer Montageplatte oder einer Montageschiene zur Anlage gebracht werden. Für die Vorausrichtung des Sammelschienenhalters beziehungsweise des Unterteils 2 in Bezug auf die Unterlage weist das Unterteil 2 einen Positionierstift 18 auf, der über die Montageseite 16 hervorsteht. Für die Montage des Unterteils 2 auf der Unterlage kann das Unterteil 2 mit dem Positionierstift 18 in eine erste Befestigungsbohrung in der Unterlagen für die spätere Montage des Unterteils 2 eingesteckt werden, so dass der weitere Schraubkanal 17 bereits in Bezug auf eine weitere Befestigungsöffnung in der Unterlage vorpositioniert ist. Nachdem über diesen weiteren Schraubkanal 17 eine erste Schraubverbindung zwischen dem Unterteil 2 und der Unterlage hergestellt worden ist, kann der Positionierstift 18 aus dem Schraubkanal 17 herausgebrochen und im weiteren Verlauf der dadurch frei werdende Schraubkanal 17 für die Herstellung einer weiteren Schraubverbindung mit der Unterlagen verwendet werden.

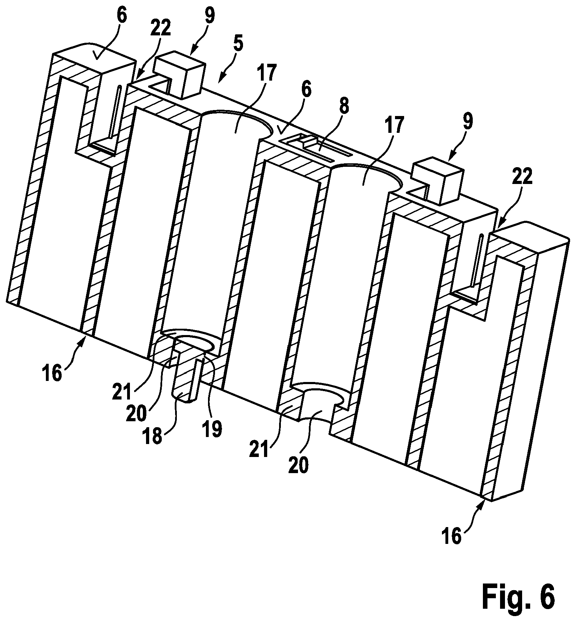

Weitere Einzelheiten dazu sind in Figur 6 gezeigt. Der Positionierstift 18 kann insbesondere über eine Sollbruchstelle 19 am Innenumfang 20 eines Ringflansches 21 befestigt sein, welcher an einem der Montageseite 16 zugewandten Ende eines der Schraubkanäle 17 angeordnet ist.

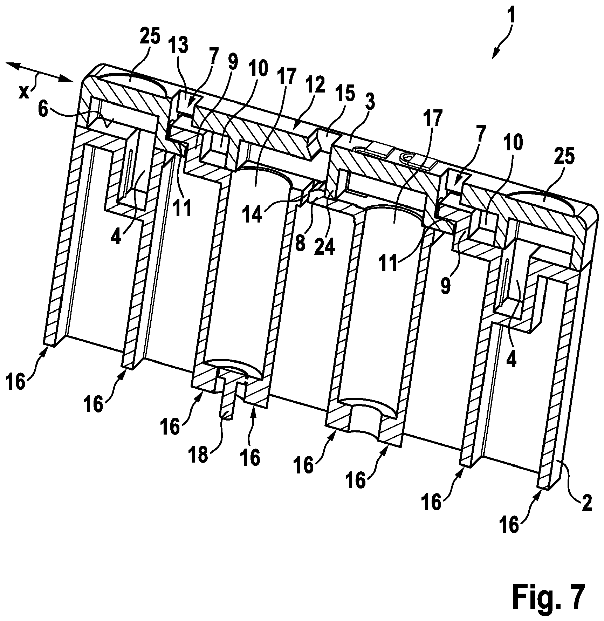

Die Ansicht gemäß Figur 7 veranschaulicht das Zusammenwirken des Unterteils 2 mit dem Oberteil 3 einer Ausführungsform eines Sammelschienenhalters 1, wenn sich diese in der Schließposition befinden. Eine kraftschlüssige Verbindung zwischen den Teilen 2, 3 ist über zwei Nut-Feder-Verbindungen 7 hergestellt. Zur Fixierung der beiden Teile 2, 3 in der dargestellten Schließposition hintergreift eine Rastklinke 8 des Unterteils 2 einen Mittelsteg 24 des Oberteils 3. Über Durchlässe 13 ist der Bereich des Hinterschnitts 11 der Ausnehmungen 10 optisch zugänglich, so dass in der Schließstellung von einem Benutzer kontrolliert werden kann, ob die Vorsprünge 9 der Unterteile 2 ordnungsgemäß den jeweiligen Hinterschnitt 11 hintergreifen und somit eine sichere Verbindung der Teile 2, 3 gewährleistet ist. Über eine Werkzeugeinstecköffnung 15 ist eine Rastaufnahme 14 in dem Oberteil 3 zugänglich, in die die Rastklinke 8 mit ihrem freien Ende eingreift. Mit einem Werkzeug, beispielsweise einem Schraubendreher, kann das freie Ende der Rastklinke 8 vorgespannt werden, bis das freie Ende der Rastklinke 8 den Mittelsteg 24 nicht mehr hintergreift und somit das Oberteil 3 gegenüber dem Unterteil 2 in Längsrichtung x, genauer in der Darstellung gemäß Figur 7 nach links, verlagert werden kann, so dass die beiden Teile 2, 3 die Offenstellung einnehmen, in welcher die Vorsprünge 9 die Hinterschnitte 11 der Ausnehmungen 10 nicht mehr hintergreifen und somit das Oberteil 3 von dem Unterteil 2 senkrecht zu der Außenseite 12 abgehoben werden kann.

### Bezugszeichenliste

- 1: Sammelschienenhalter
- 2: Unterteil
- 3: Oberteil
- 4: Sammelschienendurchlass
- 5: Auflageseite
- 6: Gleitfläche
- 7: Nut-Feder-Verbindung
- 8: Rastklinke
- 9: Vorsprung
- 10: Ausnehmung
- 11: Hinterschnitt
- 12: Außenseite des Oberteils/Unterteils
- 13: Durchlass
- 14: Rastaufnahme
- 15: Werkzeugeinstecköffnung
- 16: Montage seite
- 17: Schraubkanal
- 18: Positionierstift
- 19: Sollbruchstelle
- 20: Innenumfang
- 21: Ringflansch
- 22: Sammelschienenaufnahme
- 23: Quetschrippe
- 24: Mittel steg
- 25: Markierung
- 100: Sammelschiene
- 101: Profil seite
- x: Längsrichtung

## Patentansprüche

1. Sammelschienenhalter (1) mit einem Unterteil (2) und einem mit dem Unterteil (2) lösbar verbundenen Oberteil (3), zwischen denen, wenn sie miteinander verbunden sind, mindestens ein Sammelschienendurchlass (4) ausgebildet ist, wobei das Oberteil (3) und das Unterteil (2) an sich gegenüber liegenden Auflageseiten (5) Gleitflächen (6) aufweisen, entlang welcher sie aneinander aufliegen und zwischen einer Offenposition, in der das Oberteil (3) von dem Unterteil (2) abgehoben werden kann, und einer Schließposition, in der das Oberteil (3) über eine Nut-Feder-Verbindung (7) an dem Unterteil (2) festgelegt ist, gegeneinander verschieblich sind, wobei eine auslösbare Rastklinke (8) das Oberteil (3) und das Unterteil (2) in der Schließposition festlegt, und wobei das Unterteil (2) eine seiner Auflageseite (5) gegenüber liegende Montageseite (16) für die Montage des Unterteils (2) auf einer Unterlage aufweist, **dadurch gekennzeichnet, dass** sich ein Schraubkanal (17) zwischen der Auflageseite (5) und der Montageseite (16) erstreckt, der an der Montageseite (16) über einen aus dem Schraubkanal (17) herausragenden und über die Montageseite (16) hervorstehenden Positionierstift (18) verschlossen ist.

2. Sammelschienenhalter (1) nach Anspruch 1, bei dem eine Feder der Nut-Feder-Verbindung (7) als mindestens ein T-förmiger oder L-förmiger Vorsprung (9) ausgebildet ist, der sich von der Auflageseite (5) des den T-förmigen oder L-förmigen Vorsprung (9) aufweisenden Teils von Oberteil (3) und Unterteil (2) erstreckt.

3. Sammelschienenhalter (1) nach Anspruch 2, bei dem sich der T-förmige oder L-förmige Vorsprung (9) in eine Ausnehmung (10) des jeweils anderen Teils von Oberteil (3) und Unterteil (2) hinein erstreckt, wobei der T-förmige oder L-förmige Vorsprung (9) in der Schließstellung einen Hinterschnitt (11) der Ausnehmung (10) hintergreift, und wobei der T-förmige oder L-förmige Vorsprung (9) in der Offenstellung in Bezug auf den Hinterschnitt (11) freigestellt ist.

4. Sammelschienenhalter (1) nach Anspruch 2, bei dem das die Ausnehmung (10) aufweisende Teil von Oberteil (3) und Unterteil (2) an einer Außenseite (12) einen in den Hinterschnitt (11) mündenden Durchlass (13) aufweist.

5. Sammelschienenhalter (1) nach einem der vorangegangenen Ansprüche, bei dem die auslösbare Rastklinke (8) von einer ersten der beiden gegenüber liegenden Auflageseiten (5) vorspringt und in der Schließposition in einer Rastaufnahme (14) in einer zweiten der beiden gegenüber liegenden Auflageseiten (5) aufgenommen ist.

6. Sammelschienenhalter (1) nach Anspruch 5, bei dem das die Rastaufnahme (14) aufweisende Teil von Oberteil (3) und Unterteil (2) an einer Außenseite (12) eine in die Rastaufnahme (14) mündende Werkzeugeinstecköffnung (15) aufweist.

7. Sammelschienenhalter (1) nach Anspruch 1, bei dem der Positionierstift (18) in der Montageseite (16) lösbar und vorzugsweise über eine Sollbruchstelle (19) befestigt ist.

8. Sammelschienenhalter (1) nach Anspruch 7, bei dem der Positionierstift (18) über eine Sollbruchstelle (19) am Innenumfang (20) eines Ringflansches (21) befestigt ist, der im Innern des Schraubkanals (17) angrenzend an die Montageseite (16) und vorzugsweise fluchtend mit der Montageseite (16) angeordnet ist.

9. Sammelschienenhalter (1) nach einem der vorangegangenen Ansprüche, bei dem der Querschnitt des mindestens einen Sammelschienendurchlasses (4) von dem Querschnitt einer Sammelschienenaufnahme (22) in dem Unterteil (2) gebildet ist, wobei die Sammelschienenaufnahme (22) von der Auflageseite (5) des Oberteils (3) verschlossen ist, wenn das Oberteil (3) und das Unterteil (2) miteinander verbunden sind.

10. Sammelschienenhalter (1) nach Anspruch 9, bei dem das Oberteil (3) an seiner Außenseite (12) je Sammelschienenaufnahme (22) eine die Position der Sammelschienenaufnahme (22) kennzeichnende Markierung (25) aufweist.

11. Anordnung aus einem Sammelschienenhalter (1) nach Anspruch 10 und einer Sammelschiene (100), die in die Sammelschienenaufnahme (22) in dem Unterteil (2) eingesetzt ist, wobei eine äußere Profilseite (101) der Sammelschiene (100) mit der Gleitfläche (6) des Unterteils (2) fluchtet und an der Gleitfläche (6) des Oberteils (3) anliegt, wenn das Oberteil (3) und das Unterteil (2) miteinander verbunden sind.

## Claims

1. A busbar holder (1) having a lower part (2) and an upper part (3) which is detachably connected to the lower part (2) and between which, when they are connected to one another, at least one busbar passage (4) is formed, the upper part (3) and the lower part (2) having sliding surfaces (6) on mutually opposite support sides (5), along which they rest against each other and are displaceable relative to one another between an open position, in which the upper part (3) can be lifted off the lower part (2), and a closed position, in which the upper part (3) is fixed to the lower part (2) via a tongue- and-groove joint (7), wherein a releasable latch (8) fixes the upper part (3) and the lower part (2) in the closed position, and wherein the lower part (2) has a mounting side (16) opposite its support side (5) for mounting the lower part (2) on a base, **characterised in that** a screw channel (17) extends between the support side (5) and the mounting side (16), which is closed on the mounting side (16) by a positioning pin (18) projecting from the screw channel (17) and protruding beyond the mounting side (16).

2. The busbar holder (1) according to claim 1, in which a tongue of the tongue-and-groove connection (7) is formed as at least one T-shaped or L-shaped projection (9) which extends from the support side (5) of the part of the upper part (3) and lower part (2) having the T-shaped or L-shaped projection (9).

3. The busbar holder (1) according to claim 2, in which the T-shaped or L-shaped projection (9) extends into a recess (10) of the respective other part of the upper part (3) and lower part (2), wherein the T-shaped or L-shaped projection (9) engages behind an undercut (11) of the recess (10) in the closed position, and wherein the T-shaped or L-shaped projection (9) is exposed with respect to the undercut (11) in the open position.

4. The busbar holder (1) according to claim 2, in which the part of the upper part (3) and lower part (2) having the recess (10) has on an outer side (12) a passage (13) opening into the undercut (11).

5. The busbar holder (1) according to one of the preceding claims, in which the releasable latch (8) projects from a first of the two opposite support sides (5) and, in the closed position, is received in a latch receiver (14) in a second of the two opposite support sides (5).

6. The busbar holder (1) according to claim 5, in which the part of the upper part (3) and lower part (2) having the latch receiver (14) has on an outer side (12) a tool insertion opening (15) opening into the latch receiver (14).

7. The busbar holder (1) according to claim 1, in which the positioning pin (18) is detachably fastened in the mounting side (16) and preferably fastened via a predetermined breaking point (19).

8. The busbar holder (1) according to claim 7, in which the positioning pin (18) is fastened via a predetermined breaking point (19) to the inner circumference (20) of an annular flange (21), which is arranged inside the screw channel (17) adjacent to the mounting side (16) and preferably aligned with the mounting side (16).

9. The busbar holder (1) according to one of the preceding claims, in which the cross-section of the at least one busbar passage (4) is formed by the cross-section of a busbar receptacle (22) in the lower part (2), the busbar receptacle (22) being closed by the support side (5) of the upper part (3) when the upper part (3) and the lower part (2) are connected to each other.

10. The busbar holder (1) according to claim 9, in which the upper part (3) has a marking (25) on its outer side (12) for each busbar receptacle (22) which characterizes the position of the busbar receptacle (22).

11. An arrangement comprising a busbar holder (1) according to claim 10 and a busbar (100) which is inserted into the busbar receptacle (22) in the lower part (2), wherein an outer profile side (101) of the busbar (100) is aligned with the sliding surface (6) of the lower part (2) and abuts the sliding surface (6) of the upper part (3) when the upper part (3) and the lower part (2) are connected to one another.

## Revendications

1. Support de rail collecteur (1) avec une partie inférieure (2) et une partie supérieure (3) reliée de manière amovible avec la partie inférieure (2), entre lesquelles, lorsqu'elles sont reliées entre elles, est réalisé au moins un passage de rail collecteur (4), dans lequel la partie supérieure (3) et la partie inférieure (2) comprennent, sur des côtés d'appui (5), opposés entre eux des surfaces de glissement (6), le long desquelles elles s'appuient l'une contre l'autre et sont coulissante l'une contre l'autre entre une position ouverte, dans laquelle la partie supérieure (3) peut être soulevée de la partie inférieure (2), et une position de fermeture, dans laquelle la partie supérieure (3) est fixée à la partie inférieure (2) par l'intermédiaire d'une liaison par rainure et languette (7), dans lequel un taquet d'encliquetage amovible (8) fixe la partie supérieure (3) et la partie inférieure (2) dans la position de fermeture et dans lequel la partie inférieure (2) comprend un côté de montage (16) opposé à son côté d'appui (5), pour le montage de la partie inférieure (2) sur sa base, **caractérisé en ce qu'**un canal de vissage (17) s'étend entre le côté d'appui (5) et le côté de montage (16), qui est obturé au niveau du côté de montage (16) par une goupille de positionnement (18) sortant du canal de vissage (17) et dépassant du côté de montage (16).

2. Support de rail collecteur (1) selon la revendication 1, dans lequel une languette de la liaison par rainure et languette (7) est conçue comme au moins une saillie (9) en forme de T ou en forme de L, qui s'étend du côté d'appui (5) à partir de la partie comprenant la saillie (9) en forme de T ou en forme de L de la partie supérieure (3) et de la partie inférieure (2).

3. Support de rail collecteur (1) selon la revendication 2, dans lequel la saillie (9) en forme de T ou en forme de L s'étend dans un évidement (10) de l'autre partie de la partie supérieure (3) et de la partie inférieure (2), dans lequel, dans la position de fermeture, la saillie (9) en forme de T ou en forme de L s'accroche par-derrière à une contre-dépouille (11) de l'évidement (10) et dans lequel, dans la position d'ouverture, la saillie (9) en forme de T ou en forme de L est libérée par rapport à la contre-dépouille (11).

4. Support de rail collecteur (1) selon la revendication 2, dans lequel la partie de la partie supérieure (3) et de la partie inférieure (2) comprenant l'évidement (10) comprend, sur un côté externe (12), un passage (13) débouchant dans la contre-dépouille (11).

5. Support de rail collecteur (1) selon l'une des revendications précédentes, dans lequel le taquet d'encliquetage amovible (8) dépasse d'une première des deux côtés d'appui (5) opposés et, dans la position de fermeture, est logé dans un logement d'encliquetage (14) dans un deuxième des deux côtés d'appui (5) opposés.

6. Support de rail collecteur (1) selon la revendication 5, dans lequel la partie de la partie supérieure (3) et de la partie inférieure (2) comprenant le logement d'encliquetage (14) comprend, sur un côté externe (12), une ouverture d'insertion d'outil (15) débouchant dans le logement d'encliquetage (14).

7. Support de rail collecteur (1) selon la revendication 1, dans lequel la goupille de positionnement (18) est fixée de manière amovible dans le côté de montage (16) et de préférence par l'intermédiaire d'un point de rupture (19).

8. Support de rail collecteur (1) selon la revendication 7, dans lequel la goupille de positionnement (18) est fixée par l'intermédiaire d'un point de rupture (19) à la circonférence interne (20) d'une bride annulaire (21), qui est disposée à l'intérieur du canal de vissage (17) de manière adjacente au côté de montage (16) et de préférence en affleurement avec le côté de montage (16).

9. Support de rail collecteur (1) selon l'une des revendications précédentes, dans lequel la section transversale de l'au moins un passage de rail collecteur (4) est constitué de la section transversale d'un logement de rail collecteur (22) dans la partie inférieure (2), dans lequel le logement de rail collecteur (22) est obturé par le côté d'appui (5) de la partie supérieure (3) lorsque la partie supérieure (3) et la partie inférieure (2) sont reliées entre elles.

10. Support de rail collecteur (1) selon la revendication 9, dans lequel la partie supérieure (3) comprend, sur son côté externe (12), pour chaque logement de rail collecteur (22), un repère (25) identifiant la position du logement de rail collecteur (22).

11. Dispositif constitué d'un support de rail collecteur (1) selon la revendication 10 et d'un rail collecteur (100), qui est inséré dans le logement de rail collecteur (22) dans la partie inférieure (2), dans lequel un côté profilé externe (101) du rail collecteur (100) est en affleurement avec la surface de glissement (6) de la partie inférieure (2) et s'appuie contre la surface de glissement (6) de la partie supérieure (3) lorsque la partie supérieure (3) et la partie inférieure (2) sont reliées entre elles.
